# EUROPEAN PATENT SPECIFICATION

(11) **EP 4 561 766 B1**
(45) Date of publication and mention of the grant of the patent: **15.04.2026**
(21) Application number: 23735881.7
(22) Date of filing: 30.06.2023
(51) Int. Cl.: B08B 3/02, A47L 1/02, B64C 39/02, E04G 23/00, B05B 13/04, B05B 3/10, B05B 3/04

(54) **CLEANING SYSTEM WITH A STRUCTURE EQUIPED WITH PROPELLERS**
REINIGUNGSSYSTEM MIT EINER MIT PROPELLERN AUSGESTATTETEN STRUKTUR
SYSTÈME DE NETTOYAGE AVEC UNE STRUCTURE ÉQUIPÉE D'HÉLICES

(30) Priority: 29.07.2022 IT 202200016029
(43) Date of publication of application: 04.06.2025
(73) Proprietor: NTA Technical Solutions S.r.l., 10138 Torino (IT)
(72) Inventor: LAMESTA, Gerardo, 10138 TORINO (IT); NURISSO, Piero Franco, 10138 TORINO (IT)
(74) Representative: Garavelli, Paolo
(86) International application number: PCT/IT2023/050156
(87) International publication number: WO 2024/023855

(56) References cited:
- EP-A1- 3 599 322
- WO-A1-2019/040975
- CN-A- 106 623 172
- US-A1- 2017 305 547
- US-A1- 2019 247 877

## Description

The present invention refers to an improved cleaning system, with characteristics of adherence to the walls and equipped with a variable pressure and low flow rate pumping unit. Hereinafter, the invention will be described with reference to a cleaning system, but it can be used equally effectively in similar, but also different fields, such as industrial cleaning, material removal activities, paint stripping, etc., such as indicated further on.

Various cleaning systems are known in the art which use water at variable pressure, for example for washing pipes, reactors, floors, machinery, painting systems, tanks and the like. The pumping units and variable pressure systems available on the market have the purpose of exploiting all the power supplied by the high-pressure pump, in terms both of pressure and of flow rate. In addition, water at variable pressure allows not to use acids or solvents for cleaning, with a consequent environmental and economic benefit.

However, these systems are not satisfactory and have, among other things, the problem of having to use operating pressures that are not very high, between 80 and 200 bar, and high water flow rates, between 30 and 90 litres per minute: such conditions put the cleaning operator in serious difficulty, forced to work with violent jets and uncontrollable splashes of water at variable pressure.

Furthermore, high pressure systems are known which however require the exploitation of all the power supplied by the high-pressure pump, in terms of both pressure and flow rate.

Furthermore, these known systems, given their conformation, are not able to reach all the surfaces on which they are used (for example the large glazed surfaces of the solar panels or building facades without access to the outside).

Documents WO-A1-2019/040975 and US-A1-2019/247877 disclose known cleaning systems of the type mentioned above. WO-A1-2019/040975 discloses a cleaning system including:
- at least one pumping unit or pump designed to pump out water or other similar fluids;
- at least one electric motor connected to said pump for its activation;
- at least one device for regulating the revolutions of said pump connected to said motor for its control and for the regulation of said pump so that it delivers water at a high pressure;
- at least one nozzle;
- a mobile structure comprising:
- at least one sealing element configured to be operationally connected to a lifting means;
- at least two, and preferably four, propellers designed to move said cleaning system along a transversal and/or longitudinal axis with respect to a surface to be cleaned, said propellers being supported by a structure equipped with legs mutually connected by a bar.

Therefore, the object of the present invention is solving the aforementioned prior art problems, by providing an improved cleaning system equipped with a variable pressure and low flow rate pumping unit, which allows the following improvements to be made:
- use the minimum flow rate of water necessary for industrial cleaning, material removal, paint stripping, etc. (2-4 1/min) so as to minimize the environmental impact of both energy and waste generation (contaminated water following its use);
- use a variable pressure range, such as to be able to make the pumping unit flexible in terms of use (from 5 to 500 bar);
- be able to be easily transported in a van or similar small and handy means of transport;
- be able to be easily moved in the workplace through the use of fixed or swivel wheels;
- being able to be easily used in the workplace, namely not having to need so many connections for operation;
- be equipped with a pressure washer sliding bar for its transversal and/or longitudinal movement;
- assembly of the winch system with manual and/or automatic movement;
- replacement of engine mounts to improve aerodynamics;
- increase in the energy required for the winch and the sliding trolley by means of an additional 1,000-Watt 12VDC Switching power supply;
- addition of both rubberized (for walls) and felt (for glass surfaces) pivoting wheels.

The above and other objects and advantages of the invention, as will appear from the following description, are achieved with an improved cleaning system such as the one described in claim 1. Preferred embodiments and non-trivial variants of the present invention form the subject matter of the dependent claims.

It is understood that all attached claims form an integral part of the present description.

It will be immediately obvious that innumerable variations and modifications may be made to what has been described (for example relating to shape, dimensions, arrangements and parts with equivalent functions) without departing from the scope of protection of the invention as defined by the attached claims.

The present invention will be better described by some preferred embodiments, provided by way of non-limiting example, with reference to the attached drawings, in which:

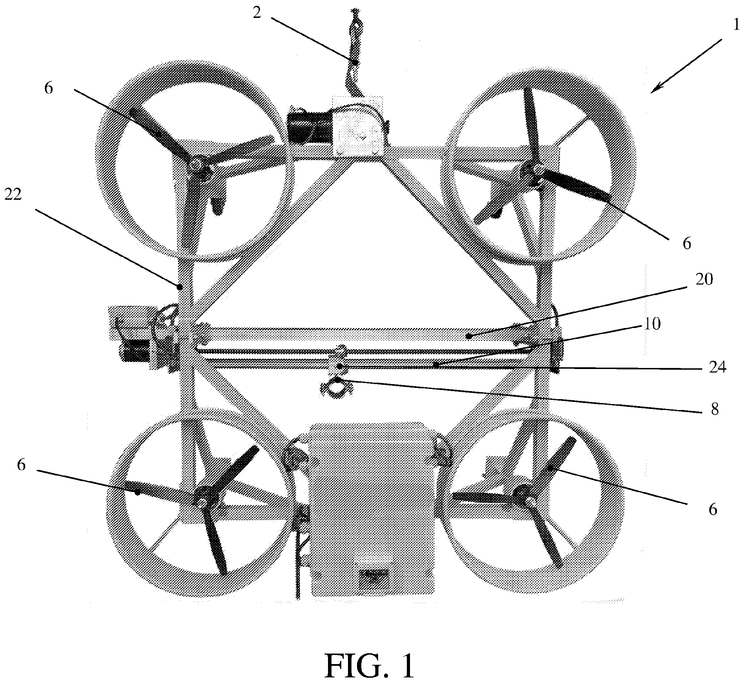

- FIG. 1 shows a front view of an embodiment of the improved cleaning system according to the present invention; and

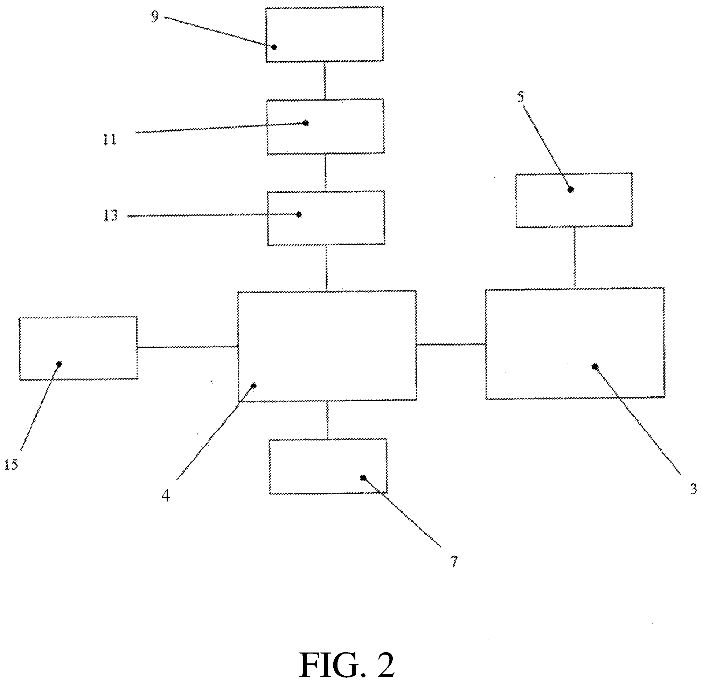

- FIG. 2 shows a block diagram of a realization of the variable pressure and low flow rate pumping unit used for cleaning.

Referring to the Figures, preferred embodiments of the system of the present invention are illustrated and described. It will be immediately obvious that innumerable variations and modifications may be made to what is described (for example relating to shape, dimensions, arrangements and parts with equivalent functions) without departing from the scope of the invention as defined by the attached claims.

Therefore, in order to implement the inventive system and to achieve the above predetermined purposes, a series of components already available on the market was assembled in order to optimize the performance, the overall dimensions, and the energy and hydraulic connections.

Unlike known systems with variable pressure pumping units, the system according to the present invention has the purpose of providing the minimum performance for carrying out the processes (industrial cleaning, material removal activities, paint stripping, etc.) in order to use the least amount of water possible and take advantage of the high rotation speeds of the nozzles; moreover, the system has the advantage of being able to reach any point of a given surface: this is where the innovation introduced by the improved cleaning system in question is concentrated, which was conceived and designed in such a way as to optimize this object.

The inventive cleaning system 1 therefore comprises:
- at least one pumping unit or high-pressure pump 4, designed to pump out water or other similar fluids;
- at least one electric motor 3 connected to the high-pressure pump 4 for its drive;
- at least one device 5 for regulating the revolutions of the pump 4, connected to the motor 3 for its control and for regulating the pump 4 so that it delivers water at a high pressure, namely from 5 to 500 bar, and a low flow rate, namely from 2 to 4 l/min;
- at least one nozzle 15 equipped with at least one rotating head rotated by at least one pneumatic motor; and
- at least one air compressor 7 suitable for supplying the compressed air supply to the pneumatic motor.

The pump 4 equipped with the aforementioned components is mounted and configured to be a transported by a mobile structure comprising:
- at least one sealing element 2 configured to be operatively connected to a lifting means, for example a winch (not shown);
   at least two, and preferably four, propellers 6 designed to move said cleaning system 1 along a transversal and/or longitudinal axis with respect to the surface to be cleaned, said propellers 6 being supported by a structure equipped with legs 22 mutually connected via a bar 20;
- at least one support element 8 for said at least one high pressure pumping unit 4, said support element 8 being operatively connected to at least one carriage 24 designed to make said pump 4 slide along a longitudinal bar 10 with respect to the surface to be cleaned.

As possible variations and alternatives, the pumping unit of the invention can further comprise at least one water filtering system 9, connected to at least one water tank 11, in turn connected to at least one electric booster pump 13, connected to the high-pressure pump 4.

The high-pressure pump 4 is connected to the electric motor 3 by means of a coupling system which transmits the motion.

The electric motor 3 is controlled by an electric panel (not shown) which includes the inverter 5 in order to be able to vary the revolutions of the high-pressure pump 4 and therefore its flow rate; the revolutions of the motor 3 are regulated by the operator according to the pressure value to be adopted and the water consumption to be obtained.

The feed water to the high-pressure pump 4 is passed through the filtering system 9 and is then stored in the accumulation tank 11; the electric booster pump 13 sends water to the inlet of the high-pressure pump 4.

The high-pressure pump 4 is also equipped with a control valve (not shown) which can be actuated both electrically and pneumatically, and the air compressor 7 supplies the necessary compressed air.

The high-pressure water is sent to the special nozzle 15, purposely designed to generate a low-capacity flow: the air compressor 7 then feeds the pneumatic motor of the rotating head of the nozzle 15. Obviously, the rotating head can have both symmetrical and asymmetrical nozzles: in addition, the system also comprises at least one second nozzle equipped with at least one rotary head rotated by the flow of water leaving the nozzles.

Advantageously, the improved cleaning system 1 is suspended from an anchorage and remotely controlled both capable of creating an aeraulic depression to counteract the thrust of a pressure washer, and equipped with an alternating transversal movement system of the water jet, and equipped with a manual and automatic ascent/descent system.

The cleaning system 1 can be equipped with pivoting wheels (not shown) rubberized (for walls) or felt (for glass surfaces).

Further variations envisage that the legs 22 are made in a telescopic manner, when the relative bar 20 is oscillating, so as to adapt the cleaning system 1 to any type of surface which is not perfectly smooth.

In particular, an all-aluminium structure was built with a plan size of 1,320 x 1,320 mm and a height of 660 mm. To create the necessary vacuum, four 16" three-bladed propellers 6 were used with a forward pitch of 6", two of which with normal pitch and two with inverted pitch, this was necessary to compensate for the torque.

The propellers 6 are driven by four 12 VDC brushless motors. The considerable power required by the motors amounts to about 1 kW, but during starting it reaches 1.5 kW. To ensure this absorption, two 1,000 Watt switching power supplies were used.

Power comes from a 220 VAC power line. The motors are controlled by 4 ESC systems for brushless motors (basically they generate three-phase alternating current, like in a frequency converter).

These are in turn controlled by a receiver connected via radio with a six-channel "Futaba^{®}" remote control which is managed by an operator on the ground.

The bar is built with an automatic scrolling system running on 12 Volt direct current, governed by two limit switches.

It consists of the following elements:
- a worm screw with a trapezoidal thread with a diameter of 14mm and a 4mm pitch, 1,000mm long;
- two worm screw support bearings with a diameter of 10 mm;
- a threaded bronze sleeve with the same pitch as the worm screw (shell), to which the pressure washer head has been made integral;
- two limit switches which alternately control the relay system;
- a 12V/DC electric motor which rotates at 2,400 rpm and with a maximum torsion load of 18 Kg/cm;
- a 12V/DC bistable relay controlled by the limit switches placed inside a watertight container;
- a 12V/DC 60/70/h monostable relay to command the winch in power;
- two 12V/DC bistable relays for motion reversal control;
- two ESC systems for steering the trolley (40/Ah) and for the winch (60/70 Ah).

As far as the electrical panel is concerned, inside it there are preferably:
- one FCV 32A/h fuse (trolley and winch management)
- FM1, FM2, FM3, FM4 fuses of 25A/h (for the management of the 4 motors), all located on the power supply phases coming from the switching power supply
- a differential switch DIF located at the input of the external 220 VAC power supply
- a timed and adjustable relay for the descent control of the RT1 winch
- an automatic winch management relay R1 of 15 A/h
- a state inversion management relay (NC/NO) R2 of 8 A/h
- an electronic relay for remote control of the winch motor
- M1 ESC for motor 1 control
- M2 ESC for motor control 2
- M3 motor control ESC 3
- M4 motor control ESC 4
- MC1 ESC for trolley motor speed control
- MV1 ESC for winch motor speed control
- Ric1 Receiver of commands from the Futaba^{®} radio control.

Advantageously, as regards the remote control, a Futaba^{®} T-HFSS 2.4 GHz was chosen, of the type used for model making, it has six channels, four of which are used for this project.

This device includes a switch for engaging the automatic ascent/descent system of the winch, a potentiometer for regulating the forward speed of the trolley, a proportional sticker for the ascent/descent of the winch, a proportional sticker for regulating the speed of the propellers, which works only with suction direction of rotation by slowly moving it upwards.

## Claims

1. Cleaning system (1) including:
- at least one pumping unit or pump (4) designed to pump out water or other similar fluids;
- at least one electric motor (3) connected to said pump (4) for its activation;
- at least one device (5) for regulating the revolutions of said pump (4), connected to said motor (3) for its control and for the regulation of said pump (4) so that it delivers water at a high pressure, namely from 5 to 500 bar, and a low flow rate, namely from 2 to 4 l/min;
- at least one nozzle (15) equipped with at least one rotating head rotated by at least one pneumatic motor;
- at least one air compressor (7) suitable for supplying compressed air to the pneumatic motor;
- a mobile structure designed to support and transport said pump (4) equipped with the aforementioned components (3, 5, 7, 15), said mobile structure comprising:
- at least one sealing element (2) configured to be operationally connected to a lifting means;
- at least two, and preferably four, propellers (6) designed to move said cleaning system (1) along a transversal and/or longitudinal axis with respect to a surface to be cleaned, said propellers (6) being supported by a structure equipped with legs (22) mutually connected by a bar (20);
- at least one support element (8) for said at least one pump (4), said support element (8) being operatively connected to at least one carriage (24) designed to slide said pump (4) along a longitudinal bar (10) with respect to the surface to be cleaned.

2. Cleaning system (1) according to claim 1, **characterized in that** it comprises at least one second nozzle equipped with at least one rotating head rotated by the flow of water leaving the nozzles.

3. Cleaning system (1) according to claim 1 or 2, **characterized in that** said cleaning system (1) is equipped with both a manual and an automatic handling system.

4. Cleaning system (1) according to claim 1, **characterized in that** the electric motor (3) is controlled by an electric panel which includes the regulating device (5) in order to vary the revolutions of the high-pressure pump (4) and therefore its flow rate, the revolutions of the motor (3) being adjusted by the operator according to the pressure value to be adopted and the water consumption to be obtained.

5. Cleaning system (1) according to claim 1, **characterized in that** the high-pressure pump (4) is connected to the electric motor (3) via a coupling system which transmits the motion.

6. Cleaning system (1) according to any one of the preceding claims, **characterized in that** it is equipped with rubber or felt wheels.

7. Cleaning system (1) according to any one of the preceding claims, **characterized in that** the legs (22) are made in a telescopic way, when the relative bar (20) is oscillating, so as to adapt the cleaning system (1) to any type of surface that is not perfectly smooth.

## Patentansprüche

1. Reinigungssystem (1) umfassend:
- mindestens eine Pumpeneinheit oder Pumpe (4), die zum Abpumpen von Wasser oder ähnlichen Flüssigkeiten ausgelegt ist;
- mindestens ein Elektromotor (3), der mit der Pumpe (4) für deren Betrieb verbunden ist;
- mindestens eine Vorrichtung (5) zur Drehzahlregelung der Pumpe (4), die mit dem Motor (3) zur Steuerung und Regelung der Pumpe (4) verbunden ist, sodass diese Wasser mit hohem Druck, d. h. von 5 bis 500 bar, und niedriger Fördermenge, d. h. von 2 bis 4 l/min, fördert;
- mindestens eine Düse (15), die mit mindestens einem Drehkopf ausgestattet ist, der von mindestens einem pneumatischen Motor angetrieben wird;
- mindestens ein Luftkompressor (7), der in der Lage ist, den pneumatischen Motor mit Druckluft zu versorgen;
- eine mobile Struktur zur Aufnahme und zum Transport der Pumpe (4), die mit den oben genannten Komponenten (3, 5, 7, 15) ausgestattet ist, wobei diese mobile Struktur Folgendes umfasst:
- mindestens ein Dichtungselement (2), das so konfiguriert ist, dass es betrieblich mit einer Hebevorrichtung verbunden werden kann;
- mindestens zwei, vorzugsweise vier Propeller (6), die dazu dienen, das Reinigungssystem (1) entlang einer Quer- und/oder Längsachse in Bezug auf eine zu reinigende Oberfläche zu bewegen, wobei die Propeller (6) von einer mit Beinen (22) ausgestatteten Konstruktion getragen werden, die mittels einer Stange (20) miteinander verbunden sind;
- mindestens ein Stützelement (8) für die mindestens eine Pumpe (4), wobei das Stützelement (8) mit mindestens einem Schlitten (24) wirksam verbunden ist, der dazu dient, die Pumpe (4) entlang einer Längsstange (10) in Bezug auf die zu reinigende Oberfläche zu verschieben.

2. Reinigungssystem (1) nach Anspruch 1, **dadurch gekennzeichnet, dass** es mindestens eine zweite Düse mit mindestens einem Drehkopf aufweist, der durch den aus den Düsen austretenden Wasserstrom in Rotation versetzt wird.

3. Reinigungssystem (1) nach Anspruch 1 oder 2, **dadurch gekennzeichnet, dass** das Reinigungssystem (1) sowohl mit einem manuellen als auch mit einem automatischen Bewegungssystem ausgestattet ist.

4. Reinigungssystem (1) nach Anspruch 1, **dadurch gekennzeichnet, dass** der Elektromotor (3) von einem Schaltschrank gesteuert wird, der die Regeleinrichtung (5) zur Variation der Drehzahl der Hochdruckpumpe (4) und damit ihrer Fördermenge enthält, wobei die Drehzahl des Motors (3) vom Bediener entsprechend dem einzustellenden Druckwert und dem zu erzielenden Wasserverbrauch geregelt wird.

5. Reinigungssystem (1) nach Anspruch 1, **dadurch gekennzeichnet, dass** die Hochdruckpumpe (4) mit dem Elektromotor (3) mittels eines Kupplungssystems verbunden ist, das die Bewegung überträgt.

6. Reinigungssystem (1) nach einem der vorhergehenden Ansprüche, **dadurch gekennzeichnet, dass** es mit Gummi- oder Filzrädern ausgestattet ist.

7. Reinigungssystem (1) nach einem der vorhergehenden Ansprüche, **dadurch gekennzeichnet, dass** die Beine (22) teleskopartig angeordnet sind, wenn die zugehörige Stange (20) oszilliert, um das Reinigungssystem (1) an jede Art von Oberfläche anzupassen, die nicht vollkommen eben ist.

## Revendications

1. Système de nettoyage (1) comprenant:
- au moins une unité de pompage ou une pompe (4) conçue pour pomper l'eau ou d'autres fluides similaires;
- au moins un moteur électrique (3) relié à ladite pompe (4) pour son fonctionnement;
- au moins un dispositif (5) pour réguler la vitesse de ladite pompe (4), relié audit moteur (3) pour sa commande et pour réguler ladite pompe (4) afin qu'elle délivre de l'eau à haute pression, c'est-à-dire de 5 à 500 bars, et à faible débit, c'est-à-dire de 2 à 4 l/min;
- au moins une buse (15) équipée d'au moins une tête rotative actionnée par au moins un moteur pneumatique;
- au moins un compresseur d'air (7) capable de fournir de l'air comprimé au moteur pneumatique;
- une structure mobile conçue pour supporter et transporter ladite pompe (4) équipée des composants susmentionnés (3, 5, 7, 15), ladite structure mobile comprenant:
- au moins un élément d'étanchéité (2) configuré pour être connecté de manière opérationnelle à un dispositif de levage;
- au moins deux, et de préférence quatre, hélices (6) conçues pour déplacer ledit système de nettoyage (1) le long d'un axe transversal et/ou longitudinal par rapport à une surface à nettoyer, lesdites hélices (6) étant supportées par une structure équipée de pieds (22) reliés entre eux au moyen d'une barre (20);
- au moins un élément de support (8) pour ladite au moins une pompe (4), ledit élément de support (8) étant relié fonctionnellement à au moins un chariot (24) conçu pour faire glisser ladite pompe (4) le long d'une barre longitudinale (10) par rapport à la surface à nettoyer.

2. Système de nettoyage (1) selon la revendication 1, caractérisé en comprenant au moins une seconde buse équipée d'au moins une tête rotative mise en rotation par le flux d'eau sortant des buses.

3. Système de nettoyage (1) selon la revendication 1 ou 2, **caractérisé en ce que** ledit système de nettoyage (1) est équipé à la fois d'un système de mouvement manuel et automatique.

4. Système de nettoyage (1) selon la revendication 1, **caractérisé en ce que** le moteur électrique (3) est commandé par un panneau électrique qui comprend le dispositif de régulation (5) afin de faire varier les tours de la pompe haute pression (4) et donc son débit, les tours du moteur (3) étant régulés par l'opérateur en fonction de la valeur de pression à adopter et de la consommation d'eau à obtenir.

5. Système de nettoyage (1) selon la revendication 1, **caractérisé en ce que** la pompe haute pression (4) est reliée au moteur électrique (3) au moyen d'un système d'accouplement qui transmet le mouvement.

6. Système de nettoyage (1) selon l'une quelconque des revendications précédentes, **caractérisé par le fait qu'**il est équipé de roues en caoutchouc ou en feutre.

7. Système de nettoyage (1) selon l'une quelconque des revendications précédentes, **caractérisé en ce que** les pieds (22) sont réalisés de manière télescopique, lorsque la barre relative (20) est oscillante, afin d'adapter le système de nettoyage (1) à tout type de surface qui n'est pas parfaitement régulière.
